(19) Europäisches Patentamt
European Patent Office
Office européen des brevets

(11) **EP 2 151 914 A1**

(12) **EUROPEAN PATENT APPLICATION**
published in accordance with Art. 153(4) EPC

(43) Date of publication:
**10.02.2010 Bulletin 2010/06**

(51) Int Cl.:
**H02M 7/48** (2007.01)　　**H02M 7/5387** (2007.01)

(21) Application number: **08751663.9**

(22) Date of filing: **01.05.2008**

(86) International application number:
**PCT/JP2008/001138**

(87) International publication number:
**WO 2008/146446 (04.12.2008 Gazette 2008/49)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.05.2007　JP 2007136664**

(71) Applicant: **Daikin Industries, Ltd.**
**Osaka-shi, Osaka 530-8323 (JP)**

(72) Inventors:
• **HAGA, Hitoshi**
**Sendai-shi**
**Miyagi 981-0952 (JP)**
• **MATSUNO, Sumikazu**
**Kusatsu-shi**
**Shiga 525-8526 (JP)**

(74) Representative: **HOFFMANN EITLE**
**Patent- und Rechtsanwälte**
**Arabellastrasse 4**
**81925 München (DE)**

(54) **POWER CONVERSION DEVICE**

(57)　In a power converter including a V connection inverter circuit, harmonic components included in output voltage are reduced to achieve a reduction in a loss of a load, such as a motor.

Operation of four switching elements (a3 to 3d) of a V connection inverter circuit (3) is controlled so that the locus of a flux vector λp on a complex plane created by using voltage vectors Vp obtained by the operation of the switching elements (3a to 3d) approaches to a circle. Specifically, in order to create the locus of the flux vector λp close to a circle by using at least three of the four voltage vectors Vp, output sequences and output periods of the voltage vectors Vp are determined.

FIG. 1

## EP 2 151 914 A1

**Description**

TECHNICAL FIELD

The present disclosure relates to power converters, and particularly relates to a strategy for reducing a harmonic loss in a load, such as a motor and the like.

BACKGROUND ART

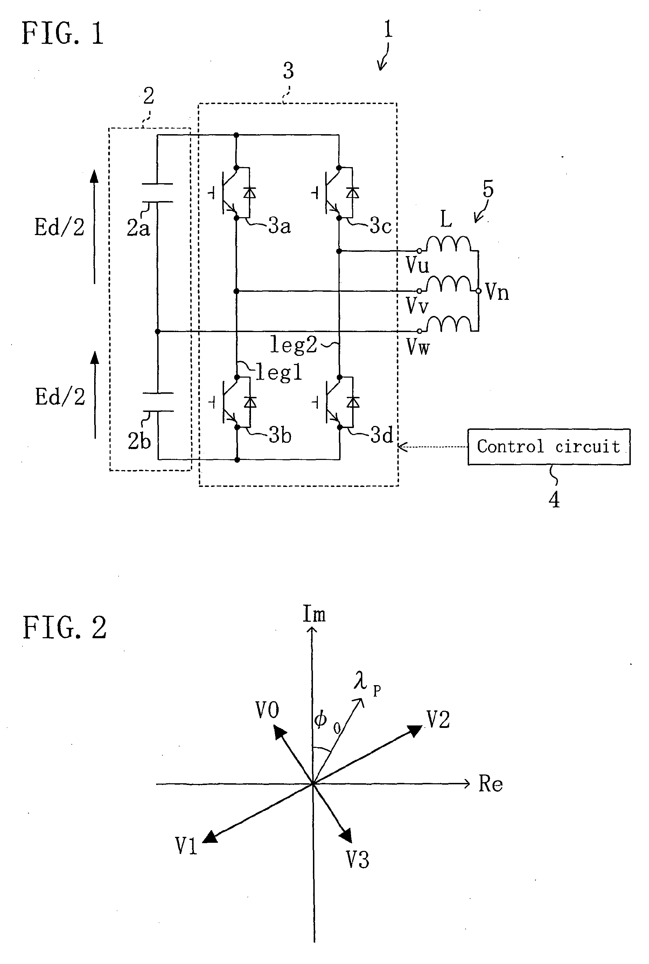

Conventionally, power converters have been known which convert DC power to AC power. As one of such power converters, a power converter has been known which includes an inverter (3) including four semiconductor switches (3a to 3d), and a capacitor circuit (2) in which a plurality of capacitors (2a, 2b) are connected in series to each other, as shown in FIG. 1, for example.

The semiconductor switches (3a to 3d) of the inverter circuit (3) are switches in which transistors and diodes are connected in parallel to each other. In the power converter (1) shown in FIG. 1, switching legs (leg1, leg2) connecting two semiconductor switches (3a to 3d) in series to each other are connected in parallel to the capacitor circuit (2). A load (5) is connected to the switching legs (leg1, leg 2) between the semiconductor switches (3a to 3d), and is connected to the intermediate potential point of the capacitor circuit (2). That is, in the power converter (1) shown in FIG. 1, the semiconductor switches (3a to 3d) of the inverter circuit (3) are V-connected to the load (5).

Thus, when the inverter circuit (3) is V-connected, the number of semiconductor switches can be reduced, thereby achieving a reduction in loss.

As disclosed in Non-patent Document 1, a power converter including a so-called V-connected inverter circuit as above is configured to compare the sine waves with a triangular wave signal to output control signals (switching signals (PWM signal)) to the switches of the inverter circuit.

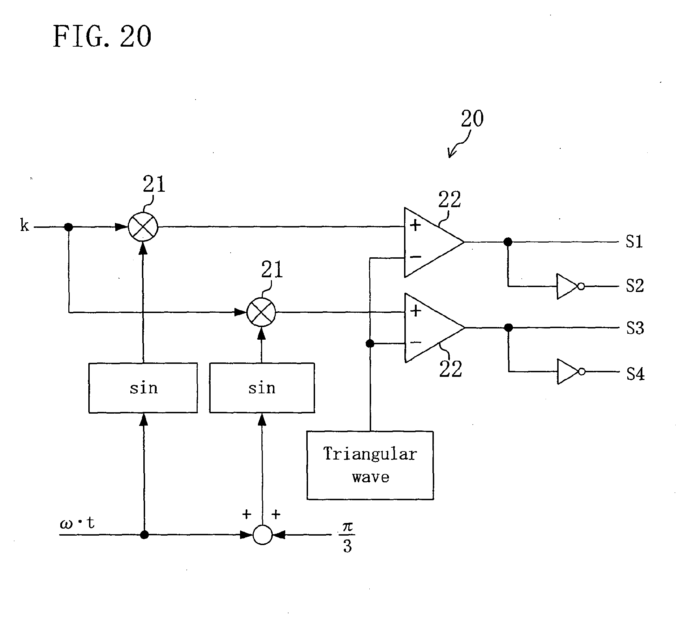

Specifically, a switching signal is output to the switches through a control circuit as shown in FIG. 20, for example. More specifically, when an output voltage command value k is input to the control circuit (20) in FIG. 20, sine waves having an amplitude of k are obtained in multipliers (21, 21), and are compared with a predetermined triangular wave in comparators (22, 22). Then, the comparison results are output as control signals S1 to S4. Non-patent Document 1: Koji Kato and Jun-ichi Itoh, "Comparison of Conducted Emission between Full Bridge and V-connection Voltage source, and Current Source Inverter," The Institute of Electrical Engineers of Japan, National Conference, 4-054, pp. 82-83, 2006

SUMMARY

PROBLEMS THAT THE INVENTION IS TO SOLVE

Incidentally, when an inverter circuit is V-connected as above, the number of switching elements reduces from six to four when compared with a general Y connection inverter circuit. Therefore, the degree of similarity to the sine wave of an output voltage is reduced, while reducing switching losses. This may cause the output voltage to include many harmonic components, thereby increasing an eddy current generated at a load, such as a motor, to increase a core loss of the load.

Further, when the switching signals are output to the switches after comparison with the triangular signal, as above, it becomes difficult to make the voltage waveform output to a load, such as a motor, to be an accurate sine wave, thereby allowing the output voltage of the V connection inverter circuit to include further more harmonic components. This may further increase the loss generated in the motor.

The present invention has been made in view of the foregoing, and its objective is to reduce, in a power converter including a V connection inverter circuit, a loss of a load, such as a motor, by reducing the harmonic components included in output voltage.

MEANS FOR SOLVING THE PROBLEMS

To attain the above objective, in a power converter according to the present invention, the operation of four switching elements (3a to 3d) of an inverter circuit (3) is controlled so that the locus of a flux vector ($\lambda$p) created on a complex plane by using voltage vectors obtained by the operation the switching elements (3a to 3d) approaches to a circle.

Specifically, a first example of the present invention is directed to a power converter including a capacitor circuit (2) which includes a plurality of capacitors (2a, 2b) connected in series to each other and which is capable of charging and discharging a DC voltage, and an inverter circuit (3) of which two switching legs (leg1, leg2) connecting respective two switching elements (3a, 3b, 3c, 3d) in series are connected in parallel to the capacitor circuit (2), where intermediate points of the switching legs (leg1, leg2) of the inverter circuit (3) are connected to the load (5), and an intermediate potential point of the capacitor circuit (2) is connected to the load (5), thereby converting DC power of the capacitor circuit (2) to AC power to supply the AC power to the load (5).

The power converter further includes switching control means (4) which controls the operation of the switching elements (3a, 3b, 3c, 3d) of the inverter circuit (3) so that a locus of a flux vector ($\lambda$p) created on a complex plane by using voltage vectors (Vp) obtained by operation of the switching elements (3a, 3b, 3c, 3d) approaches to a circle.

By the above configuration, the locus of the flux vector ($\lambda$p) of the inverter circuit (3) approaches to a circle on the complex plane. This results in output of an alternating voltage having an accurate sine wave including few harmonic components. That is, when the flux vector ($\lambda$p) obtained by time quadrature of voltage vectors creates an accurate circular locus on the complex plane, few harmonic components can be included in the output voltage waveform. Thus, by bringing the locus of the flux vector ($\lambda$p) to a circle in the V connection inverter circuit (3), the harmonic components included in the output voltage can be reduced.

Accordingly, as described above, bringing the locus of the flux vector created by using the voltage vectors obtained by the switching operation to a circle can reduce the harmonic components of the output voltage, thereby reducing a loss generated in the load (5), such as motor.

In the above configuration, the switching control means (4) allows the flux vector $\lambda$p to create the locus by using at least three voltage vectors of four voltage vectors (V0, V1, V2, V3) obtained by the operation of the switching elements (3a, 3b, 3c, 3d) of the inverter circuit (3) in one cycle of a carrier frequency (a second example).

This can create the locus of the flux vector ($\lambda$p) on the complex plane by using the voltage vectors (V0, V1, V2, V3) obtained by the operation of the switching elements (3a, 3b, 3c, 3d) of the inverter circuit (3), thereby realizing the configuration of the first example.

Further, the switching control means (4) calculates output periods of the voltage vectors (V0, V1, V2, V3) used for creating the locus of the flux vector $\lambda$p on the basis of the carrier frequency (T0), and controls the operation of the switching elements (3a, 3b, 3c, 3d) so as to allow the voltage vectors (V0, V1, V2, V3) to be output for the calculated output periods (a third example).

This can determine the output periods of the voltage vectors (V0, V1, V2, V3) according to the carrier frequency (T0). Further, since the output periods of the voltage vectors (V0, V1, V2, V3) can be determined so that the flux vector ($\lambda$p) creates a locus close to a circle on the complex plane, creation of the locus of the flux vector ($\lambda$p) close to a circle can be ensured.

That is, in the V connection inverter circuit (3) including the four switching elements (3a, 3b, 3c, 3d), by using at least three voltage vectors of the four voltage vectors (V0, V1, V2, V3) obtained by the operation of the switching elements (3a, 3b, 3c, 3d), the locus of the flux vector ($\lambda$p) can be created according to the carrier frequency (T0) and can be close to a circle.

Thus, the harmonic component included in the output voltage can be reduced, thereby achieving a reduction in loss generated in the load (5).

The switching control means (4) controls the operation of the switching elements (3a, 3b, 3c, 3d) so that the locus of the flux vector $\lambda$p overlaps on the complex plane (a fourth example).

Accordingly, even in the V connection inverter circuit (3), which cannot obtain a zero voltage vector by the operation of the switching elements (3a, 3b, 3c, 3d) as in a Y connection inverter circuit, the flux vector ($\lambda$p) does not create an unnecessarily big locus, but can create a locus close to a circle according to the carrier frequency.

Thus, a reduction in the harmonic components included in the output voltage can be ensured, thereby ensuring a reduction in loss generated in the load (5).

Furthermore, the switching control means (4) controls the operation of the switching elements (3a, 3b, 3c, 3d) so that the locus of the flux vector $\lambda$p is created by using all the four voltage vectors (V0, V1, V2, V3) in one cycle of the carrier frequency so as to be close to a circle (a fifth example). Alternatively, the switching control means (4) controls the operation of the switching elements (3a, 3b, 3c, 3d) so that the locus of the flux vector $\lambda$p is created by using three voltage vectors of the four voltage vectors (V0, V1, V2, V3) in one cycle of the carrier frequency so as to be close to a circle (a sixth example).

When compared with conventional control on the switching elements (3a, 3b, 3c, 3d) by comparison with a triangular wave, creating the locus of the flux vector ($\lambda$p) on the complex plane by using at least three voltage vectors in one cycle of the carrier frequency can achieve accurate control of the waveform of the output voltage. This can reduce the harmonic components included in the output voltage. Thus, a loss generated in the load (5) can be reduced.

Moreover, as in the sixth example, the switching elements (3a, 3b, 3c, 3d) are operated so that the locus of the flux vector ($\lambda$p) created by using the three voltage vectors approaches to a circle to reduce the number of times of switching in the inverter circuit (3), thereby reducing a loss generated in the load (5).

Furthermore, the switching control mans (4) controls the operation of the switching elements (3a, 3b, 3c, 3d) so that the locus of the flux vector $\lambda$p created by using three voltage vectors of the four voltage vectors (V0, V1, V2, V3) crosses an ideal circular locus in a half of a cycle of the carrier frequency (a seventh example).

This can reduce the distance of the locus of the flux vector ($\lambda$p) from the ideal circular locus, and the locus of the flux vector ($\lambda$p) further approaches to a circle. Accordingly, the harmonic components included in the output voltage can be reduced when compared with a conventional inverter circuit, thereby reducing a loss generated in the load (5).

Still, the switching control means (4) changes, where the locus of the flux vector $\lambda$p created on the complex plane is divided into a plurality of regions (I, II, III, IV), output sequences and output periods of the voltage vectors (V0, V1, V2, V3) correspondingly to regions so that the locus of the flux vector $\lambda$p approaches to arcs in the respective regions (I, II, III, IV) (an eighth example).

This can further ensure bringing of the locus of the flux vector ($\lambda$p) on the complex plane close to a circle, thereby further ensuring a reduction in harmonic components included in the output voltage of the inverter circuit (3). This can further ensure a reduction in loss generated in the load (5), such as a motor.

Yet, the switching control means (4) controls the operation of the switching elements (3a, 3b, 3c, 3d) so that the locus of the flux vector $\lambda$p created by the voltage vectors (V0, V1, V2, V3) is point symmetric with respect to an ideal circular locus in every half cycle of the carrier frequency (a ninth example).

Thus, when the locus of the flux vector ($\lambda$p) is point symmetric with respect to the ideal circular locus every half cycle of the carrier frequency (T0), the locus of the flux vector ($\lambda$p) can further be closer to a circle. Accordingly, a reduction in the harmonic components included in the output voltage can be further ensured, thereby further ensuring a reduction in loss generated in the load (5).

A tenth example is directed to a power converter including; a capacitor circuit (12) which includes a plurality of capacitors (12a, 12b) connected in series to each other and which is capable of charging and discharging a DC voltage; an inverter circuit (13) of which three switching legs (leg1, leg2, leg3) connecting respective two switching elements (13a, 13b, 13c, 13d, 13e, 13f) in series are connected in parallel to the capacitor circuit (12); a switching circuit (16) which is connected between an intermediate potential point of the capacitor circuit (12) and an intermediate point of one (leg1) of the switching legs; and switching circuit control means (14b) which turns on the switching circuit (16) when a load (15) is low to set the inverter circuit (13) in a two-phase connection, and which turns off the switching circuit (16) when the load (15) is high to set the inverter circuit (13) in a three-phase connection.

The power converter further includes switching control means (14a) which controls the operation of the switching elements (13a, 13b 13c, 13d, 13e, 13f) of the inverter circuit (13), when the switching circuit control means (14b) turns on the switching circuit (16), so that a locus of a flux vector $\lambda$p on a complex plane created by using at least three voltage vectors of four voltage vectors (V0, V1, V2, V3) obtained by the operation of the switching elements (13a, 13b, 13c, 13d, 13e, 13f) in one cycle of a carrier frequency approaches to a circle.

By the above configuration, operation control on the switching circuit (16) by the switching circuit control means (14b) can switch the inverter circuit (3) according to the magnitude of the load (15) between operation where two phases are connected and that where the three phases are connected. Accordingly, when the motor (15) is in low load operation, for example, the inverter circuit (13) can be set in the operation where two phases are connected as V, thereby reducing the switching loss. When the motor (15) is in high load operation, the inverter circuit (13) can be set in the operation where the three phases are connected as Y, rather than the V connection needing a double voltage, thereby achieving energy conservation.

Moreover, in the operation where two phases are connected, bringing of the locus of the flux vector ($\lambda$p) created by using the voltage vectors (V0, V1, V2, V3) obtained by the operation of the switching circuit (3a, 3b, 3c, 3d) of the inverter circuit (13) closer to a circle can reduce the harmonic components included in the output voltage, thereby achieving a reduction in loss generated in the load (15).

Furthermore, an electric motor (5, 15) of a compressor is driven by AC power converted in the inverter circuit (3, 13) (an eleventh example). Air conditioners and refrigerators are frequently operated in a region whose output is lower than the rated output, that is, a low rotation range. Therefore, the electric motor (5) used for their compressors can be driven by the AC power output from the inverter circuit (3). Thus, when compared with a case using the Y connection inverter circuit (3), the switching losses can be reduced, thereby achieving an improvement of operation efficiency on the compressor.

In particular, the compressor is provided in a refrigerant circuit of an air conditioner (a twelfth example). In an intermediate mode of the air conditioner whose cooling or heating load is low, the electric motor (5) of the compressor is driven at low speed. Accordingly, when the electric power is supplied from the inverter circuit (3) to the electric motor (5) in this intermediate mode, operation efficiency of the compressor can be improved, thereby achieving energy conservation of the air conditioner.

ADVANTAGES

As described above, in the power converter (1) according to the present invention, which includes the inverter circuit (3) in which the four switching elements (3a, 3b, 3c, 3d) are V-connected to the load (5), the switching control means (4) controls the operation of the switching elements (3a, 3b, 3c, 3d) so that the locus of the flux vector ($\lambda$p) created

on the complex plane by using the voltage vectors (V0, V1, V2, V3) obtained by the operation of the switching elements (3a, 3b, 3c, 3d) approaches to a circle. This can reduce the harmonic components included in the output voltage of the inverter circuit (3), thereby achieving reduction in loss generated in the load (5).

In the second example, the switching control means (4) performs control so that the flux vector ($\lambda$p) creates the locus by using at least three voltage vectors of the four voltage vectors (V0, V1, V2, V3) obtained by the operation of the switching elements (3a, 3b, a3c, 3d) of the inverter circuit (3). This enables realization of the configuration of the first example.

In the third example, the switching control means (4) calculates the output periods of the voltage vectors (V0, V1, V2, V3) on the basis of the carrier frequency (T0), and controls the operation of the switching elements (3a, 3b, 3c, 3d) so that the voltage vectors (V0, V1, V2, V3) are output in the output periods. Therefore, the locus of the flux vector ($\lambda$p) can be created according to the carrier frequency (T0), and can be further closer to a circle. Accordingly, a reduction in the harmonic components included in the output voltage can be further ensured, thereby ensuring a reduction in loss generated in the load (5).

In the fourth example, the switching control means (4) controls the operation of the switching elements (3a, 3b, 3c, 3d) so that the flux vector ($\lambda$p) retraces the same locus on the complex plane. Therefore, even in the V connection inverter circuit (3), which has no zero voltage vector as in a Y connection inverter circuit, the locus of the flux vector ($\lambda$p) can be created according to the carrier frequency (T0) so as to be closer to a circle. Thus, by the above configuration, a reduction in the harmonic components of the output voltage can be ensured even in the V connection.

In the fifth example, the switching control means (4) controls the operation of the switching elements (3a, 3b, 3c, 3d) so that the flux vector ($\lambda$p) creates a locus close to a circle by using all of the four voltage vectors (V0, V1, V2, V3). Further, in the sixth example, the switching control means (4) controls the operation of the switching elements (3a, 3b, 3c, 3d) so as that the flux vector ($\lambda$p) creates a locus close to a circle by using at least three of the four voltage vectors (V0, V1, V2, V3). By these configurations, the configuration of the first example can be realized. In particular, when the flux vector ($\lambda$p) creates the locus of the flux vector ($\lambda$p) close to a circle by using the three voltage vectors, as in the sixth example, the number of times of switching in the inverter circuit (3) reduces, thereby reducing a loss in the inverter circuit (3). That is, the configuration of the sixth example is especially advantageous where a loss in the inverter circuit (3) is larger than that in the load (5), such as a motor.

In the seventh example, the switching control mans (4) controls the operation of the switching elements (3a, 3b, 3c, 3d) so that the flux vector ($\lambda$p) creates a locus across the ideal locus of the flux vector ($\lambda$p) in one cycle of the carrier frequency (T0) by using, similarly to the sixth example, three of the four voltage vectors (V0, V1, V2, V3). Accordingly, the locus of the flux vector ($\lambda$p) can further be brought closer to a circle, and this can further ensure a reduction in the harmonic components included in the output voltage, thereby ensuring a reduction in a loss generated in the load (5).

In the eighth example, the switching control mans (4) controls the operation of the switching elements (3a, 3b, 3c, 3d) to change the output sequences and output periods of the voltage vectors (V0, V1, V2, V3) so that the locus of the flux vector ($\lambda$p) approaches to an arc in the respective regions into which the locos of the flux vector ($\lambda$p) created on the complex plane is divided. Accordingly, the locus of the flux vector ($\lambda$p) can further be brought closer to a circle, thereby further ensuring a reduction in harmonic components included in the output voltage.

In the ninth example, the switching control means (4) controls the operation of the switching elements so that the locus of the flux vector ($\lambda$p) becomes point symmetric with respect to the ideal circular locus in every half cycle of the carrier frequency. Thus, the locus of the flux vector ($\lambda$p) can be further brought closer to a circle. This can further ensure a reduction in harmonic components included in the output voltage. Accordingly, a reduction in a loss generated in the load (5) can be ensured.

The power converter according to the tenth example includes the switching circuit (16) connected between the intermediate potential point of the capacitor circuit (12) and the intermediate point of one switching leg (leg1) of the three switching legs (leg1, leg2, leg3) included in the inverter circuit (13), and the switching control means (14b) on/off switching the switching circuit (16) according to the magnitude of the load (15). When the load (15) is low, the V connection having slight switching losses is established. By contrast, when the load (15) is high, the Y connection, which does not require twice the voltage unlike the V connection, is established. This can achieve efficient power conversion. Further, the switching control means (14a) is provided which controls the operation of switching elements (3a, 3b, 3c, 3d) so that the locus of the flux vector ($\lambda$p) created by using at least three of the four voltage vectors (V0, V1, V2, V3) approaches to a circle when the V connection is established. Thus, the harmonic components included in the output voltage can be reduced, thereby achieving a reduction in loss generated in the load (5).

Furthermore, in the eleventh example, the power converted in the inverter circuit (3) is supplied to the electric motor (5) of the compressor. This can reduce switching losses when compared with a Y connection inverter circuit, thereby improving operation efficiency of the compressor. In particular, as in the twelfth example, when the power is supplied to the compressor provided in the refrigerant circuit of the air conditioner, operation efficiency of the air conditioner can be also improved.

BRIEF DESCRIPTION OF THE DRAWINGS

[FIG. 1] FIG. 1 is a circuit diagram showing a schematic configuration of a power converter according to Example Embodiment 1.

[FIG. 2] FIG. 2 is an illustration showing a relationship between voltage vectors and a flux vector on a complex plane in a region I.

[FIG. 3] FIG. 3 is an illustration showing the locus of a flux vector in the region I.

[FIG. 4] FIG. 4 is an illustration where the locus of a flux vector is divided into four regions on a complex plane.

[FIG. 5] FIG. 5 is an illustration showing the locus of a flax vector in a region II.

[FIG. 6] FIG. 6 is an illustration showing the relationship between voltage vectors and a flux vector on a complex plane in the region II.

[FIG. 7] FIG. 7 is a table indicating output sequences of voltage vectors in regions.

[FIG. 8] FIG. 8 is a block diagram showing a schematic configuration of a control circuit.

[FIG. 9] FIG. 9 is graphs showing the result of simulation.

[FIG. 10] FIG. 10 is an illustration showing the locus of a flux vector in the region I according to Example Embodiment 2.

[FIG. 11] FIG. 11 is an illustration showing the locus of a flux vector in the region II.

[FIG. 12] FIG. 12 is a table indicating output sequences of voltage vectors in the regions.

[FIG. 13] FIG. 13 is graphs showing a result of simulation.

[FIG. 14] FIG. 14 shows results of simulation (results of FET analysis) in Example Embodiment 2 (FIG. 14(a)) and a conventional case (FIG. 14(b)).

[FIG. 15] FIG. 15 is an illustration showing the locus of a flux vector in the region I according to Example Embodiment 3.

[FIG. 16] FIG. 16 is a table indicating output sequences of voltage vectors in the regions.

[FIG. 17] FIG. 17 is graphs showing a result of simulation.

[FIG. 18] FIG. 18 shows results of simulation (results of FET analysis) in Example Embodiment 3 (FIG. 18(a)) and a conventional case (FIG. 18(b)).

[FIG. 19] FIG. 19 is a circuit diagram showing a schematic configuration of a power converter according to Example Embodiment 4.

[FIG. 20] FIG. 20 is a diagram showing a control circuit for conventional switching control.

EXPLANATION OF CHARACTERS

1, 11 power converter
2, 12 capacitor circuit
2a, 2b, 12a, 12b capacitor
3, 13 inverter circuit
3a to 3d, 13a to 13f switching element
4, 14 control circuit
5, 15 motor (load)
14a switching control section (switching control means)
15b switching circuit control section (switching circuit control means)
16 switching circuit
leg1, leg2, leg3 switching leg
Vp, V0 to V3 voltage vector
$\lambda$p flux vector

BEST MODE FOR CARRYING OUT THE INVENTION

Preferred example embodiments of the present invention will be described below with reference to the accompanying drawings. It is noted that the above example embodiments are merely preferred examples, and are not intended to limit the scope of the present invention, its applicable objects, and its use.

<Example Embodiment 1>

Example Embodiment 1 of the present invention will be described below. As shown in FIG. 1, a power converter (1) of the present example embodiment includes a capacitor circuit (2), an inverter circuit (3), and a control circuit (4) (switching control means). Although not shown particularly, the power converter (1) includes a rectifier circuit rectifying an AC voltage of a commercially available power source and converting it to a DC voltage. The power converter (1) is used for driving an electric motor (hereinafter referred to as a motor) for a compressor provided in a refrigerant circuit in an air conditioner, for example.

The capacitor circuit (2), in which two capacitors (2a, 2b) are connected in series to each other, is connected to the rectifier circuit not shown. The capacitor circuit (2) charges and discharges the DC voltage converted in the rectifier circuit.

The inverter circuit (3) is connected to the capacitor circuit (2) in parallel to each other. The inverter circuit (3) includes four switching elements (3a to 3d) in bridge connection. Specifically, in the inverter circuit (3), two switching legs (leg1, leg2), which connect two switching elements in series to each other, are wired. On/off switching of the switching elements (3a to 3d) converts the DC voltage to the AC voltage, and the AC voltage is supplied to the motor (5). The switching elements (3a to 3d) configure semiconductor switches in which transistors (self-turn-off elements) are connected in parallel to diodes.

A point between the two capacitors (2a, 2b) of the capacitor circuit (2) and the intermediate points of the switching legs (leg1, leg2) of the inverter circuit (3) are connected to respective phases of the motor (5) as a load. That is, the inverter circuit (3) configures a so-called V connection inverter circuit in which the switching elements (3a to 3d) are V-connected to the load (5).

In the V connection inverter circuit as above, the number of switching elements can be reduced when compared with a conventional Y connection inverter circuit, thereby reducing losses generated in the switching elements. However, in order to output a voltage at the same level as that in the Y connection inverter circuit, the V connection inverter circuit requires an input voltage twice as much as that necessary for the Y connection inverter circuit.

Furthermore, such a reduction in the number of switching elements when compared with the Y connection inverter circuit tends to cause strain in the voltage waveform when the inverter circuit (3) converts the DC voltage to the AC voltage. Thus, many harmonic components may tend to be included. This can increase an eddy current generated in the load (5) to cause an increase in core loss.

By contrast, in the present invention, the operation of the switching elements (3a to 3d) in the inverter circuit (3) is controlled so as to reduce the harmonic components included in the output voltage of the inverter circuit (3). That is, in view of the fact that, the more the locus of a flux vector obtained by integrating voltage vectors of the inverter circuit (3) approaches to a circle on a complex plane, the fewer harmonic components the output voltage of the inverter circuit (3) includes, and the more accurate sine wave the output waveform can be, the present invention was developed so that the operation of the switching elements (3a to 3d) is controlled so as to bring the locus of the flux vector created by using the voltage vectors obtained by the operation of the switching elements (3a to 3d) closer to a circle.

The relationship between the flux vector and the circular locus will be first described below.

As shown in FIG. 1, assume that the potentials of the output terminals of the V connection inverter circuit (3) as above are Vu to Vw. The flux vector λp obtained from the voltage vectors Vp and time quadrature of Vp can be defined by the following equations.

[Equation 1]

$$V_p = \sqrt{\frac{2}{3}}\{v_u + \alpha^2 v_v + \alpha v_w\} \qquad \dots (1)$$

[Equation 2]

$$\lambda_p = \int V_p dt \qquad \dots (2)$$

where $\alpha = \exp(j2\pi/3)$

For example, a voltage vector V and a flux vector λ, where the ideal three-phase AC voltage expressed in Equation (3) is applied to the load (5), can be obtained as follows by using Equations (1) and (2).

[Equation 3]

$$\begin{pmatrix} v_u - v_n \\ v_v - v_n \\ v_w - v_n \end{pmatrix} = \sqrt{\frac{2}{3}} V_\alpha \begin{pmatrix} \cos \omega t \\ \cos\left( \omega t - \dfrac{2\pi}{3} \right) \\ \cos\left( \omega t + \dfrac{2\pi}{3} \right) \end{pmatrix} \qquad \cdots (3)$$

$$V = Va \cdot \exp(-j\omega t) \qquad \cdots (4)$$

$$\lambda = j Va/\omega \cdot \exp(-j\omega t) \qquad \cdots (5)$$

That is, when the sine wave voltage of balanced three phases is applied to the load (5), the flux vector $\lambda$ creates a locus having an amplitude of Va/$\omega$ and changing in an angular frequency of $\omega$. Accordingly, in order to obtain a waveform including no harmonic component in the output voltage waveform of the V connection inverter circuit (3), the locus of the flux vector $\lambda p$ in the V connection inverter circuit (3) may be brought closer to a circle. Here, Va in Equations (4) and (5) is a maximum value of the voltage.

The voltage vectors will be described next.

In the V connection inverter circuit (3) shown in FIG. 1, when the ON state of the switching elements (3a, 3c) on the upper arms of the switching legs (leg1, leg2) is indicated as 1, and the ON state of the switching elements (3b, 3d) on the lower arms thereof is indicated as 0, four switching states of 00, 01, 10, 11 are present in the UV phase. In the switching legs (leg1, leg2), when the switching elements (3a, 3c) on the upper arm are in the ON state, the switching elements (3b, 3d) on the lower arm are in the OFF state. Conversely, when the switching elements (3b, 3d) on the lower arm are in the ON state, the switching elements (3a, 3c) on the upper arm are in the OFF state. The voltage vectors Vp in the states of 00 to 11 as above are indicated as V0 to V3.

According to FIG. 1, Vu = Ed, Vv = 0, and Vw = Ed/2 can be lead. Therefore, a voltage in the three phases in, for example, V2 (a state 10 in the UV phase) is

[Equation 4]

$$v_2 = \sqrt{\frac{2}{3}} \left( E_d + \alpha^2 \cdot 0 + \alpha \cdot \frac{E_d}{2} \right) = \frac{1}{\sqrt{2}} E_d \exp\left( j \frac{\pi}{6} \right)$$

Similarly, the voltage vectors Vp in the other states can be calculated as follows.

[Equation 5]

$$V_0 = \sqrt{\frac{2}{3}} \left( 0 + \alpha^2 \cdot 0 + \alpha \cdot \frac{E_d}{2} \right) = \sqrt{\frac{2}{3}} \cdot \frac{E_d}{2} \exp\left( j \frac{2\pi}{3} \right)$$

[Equation 6]

$$V_1 = \sqrt{\frac{2}{3}}\left(0 + \alpha^2 \cdot E_d + \alpha \cdot \frac{E_d}{2}\right) = \frac{1}{\sqrt{2}} E_d \exp\left(j\frac{7\pi}{6}\right)$$

[Equation 7]

$$V_3 = \sqrt{\frac{2}{3}}\left(E_d + \alpha^2 \cdot E_d + \alpha \cdot \frac{E_d}{2}\right) = \sqrt{\frac{2}{3}} \cdot \frac{E_d}{2} \exp\left(j\frac{5\pi}{3}\right)$$

FIG. 2 shows the voltage vectors V0 to V3 expressed on a complex plane. Thus, in the V connection inverter circuit (3) as above, the obtainable voltage vectors are four, V0 to V3. Further, in a Y connection inverter circuit, there is a zero voltage vector having no magnitude among obtainable voltage vectors. However, it is understood that the above V connection inverter circuit (3) has no such a zero voltage vector.

In the present invention, the output sequences and output periods of the voltage vectors (V0, V1, V2, V3) of the V connection inverter circuit (3) having the above feature are devised so that the locus of the flux vector λp more approaches to a circle on a complex plane.

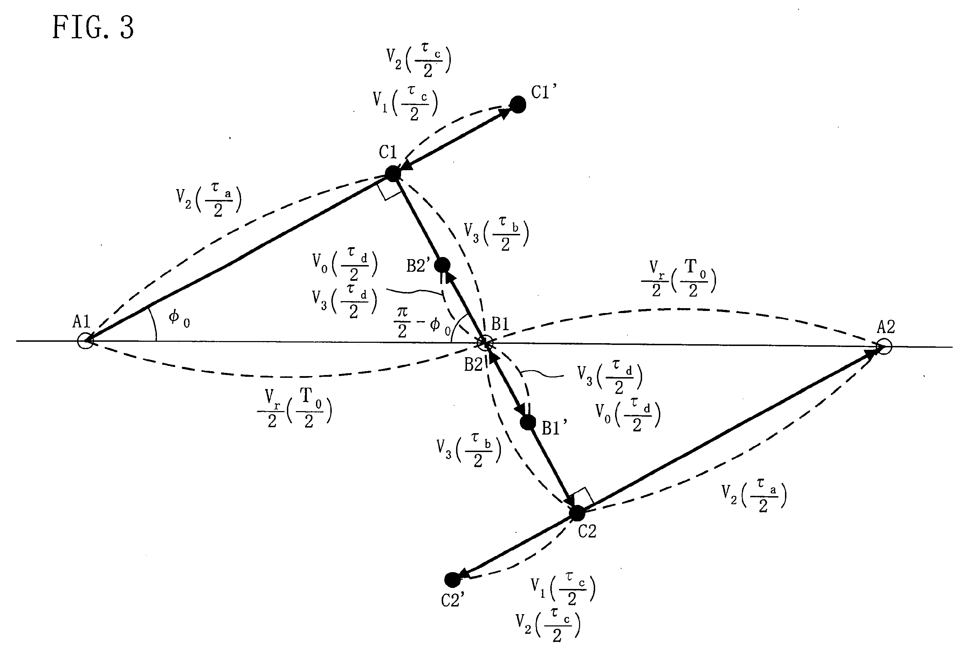

Specifically, in order to bring the locus of the flux vector λp of the inverter circuit (3) close to a circle, consider making δλ as a gap of λp from the ideal circular locus in a minute time period to 0. One example of the locus of the flux vector λp in this case is shown in FIG. 3. FIG. 3 shows a case where the voltage vectors Vp are combined so as to bring λp close to a circular locus (a line segment between a point A1 and a point A2 in FIG. 3) as far as possible in one cycle T0 of the carrier frequency.

That is, in FIG. 3, in order to cause the voltage to follow the voltage command value Vr in one cycle T0 of the carrier frequency, the flux vector λp may create the locus moving from the point A1 to the point A2 by using a plurality of voltage vectors Vp. It is noted that, in the example shown in FIG. 3, one cycle T0 of the carrier frequency is equal to τa+τb+2τc+2τd.

In the example shown in FIG. 3, when the flux vector λp is located at the point A1, the voltage vector V2 is output for a period (τa+τc)/2 to move the flux vector λp to a point C1'. Then, the voltage vector V1 in the direction reverse to the voltage vector V2 is output for a period τc/2 to return the flux vector λp to a point C1. Next, the voltage vector V3 is output for a period (τb+τd)/2 to move the flux vector λp to a point B1'. Then, the voltage vector V0 in the direction reverse to the voltage vector V3 is output for a period τd/2 to allow the flux vector λp to reach a point B1.

Subsequently, for moving the flux vector λp from the point B1 to the point A2, the voltage vectors Vp may be output in the sequence reverse to the above sequence. That is, the voltage vector V0 is output for the period τd/2 to move the flux vector λp to a point B2'. Next, the voltage vector V3 in the reverse direction thereto is output for the period (τb+τd)/2 to move the flux vector λp to a point C2. Then, the voltage vector V1 is output for the period τc/2 to move the flux vector λp to a point C2'. Thereafter, the voltage vector V2 in the direction reverse thereto is output for the period (τa+τc)/2 to cause the flux vector λp to reach the point A2.

Here, since the carrier frequency T0 is τa+τb+2τc+2τd as described above, τa to τd can be expressed by the following expressions.

$$\tau a = k \cdot T0 \cdot \cos\varphi 0$$

$$\tau b = \sqrt{3} \cdot k \cdot T0 \cdot \sin\varphi 0$$

$$\tau c = 1/2 \cdot (T0 - \tau a - \tau b) \cdot (\tau a/(\tau a + \tau b))$$

$$\tau d = 1/2 \cdot (T0 - \tau a - \tau b) \cdot (\tau b/(\tau a + \tau b))$$

Here, $k = \sqrt{2} \cdot Vr/Ed$ in the above expressions.

It is noted that, from FIG. 3, the respective periods $\tau0$ to $\tau3$ for which the respective voltage vectors V0 to V3 are output are

$$\tau0 = \tau d$$

$$\tau1 = \tau c$$

$$\tau2 = \tau a + \tau c$$

$$\tau3 = \tau b + \tau d$$

The vector retraces the same locus after once passing the points B and C in this way. This is because the V connection inverter circuit (3) has no zero voltage vector having no magnitude, as described above, and therefore, $\lambda p$ cannot stay at one point. Further, as described above, $\lambda p$ creates the locus so as to overlap. This can eliminate the need to create a large locus of $\lambda p$ in one cycle of the carrier frequency, thereby reducing the harmonic components included in the output voltage as many as possible.

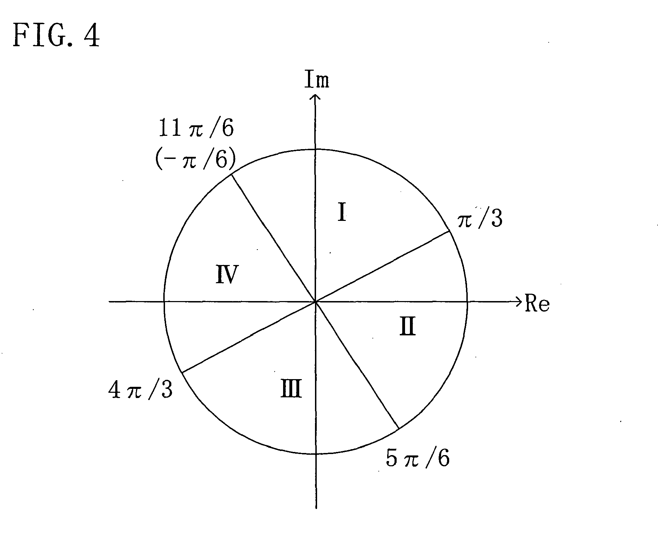

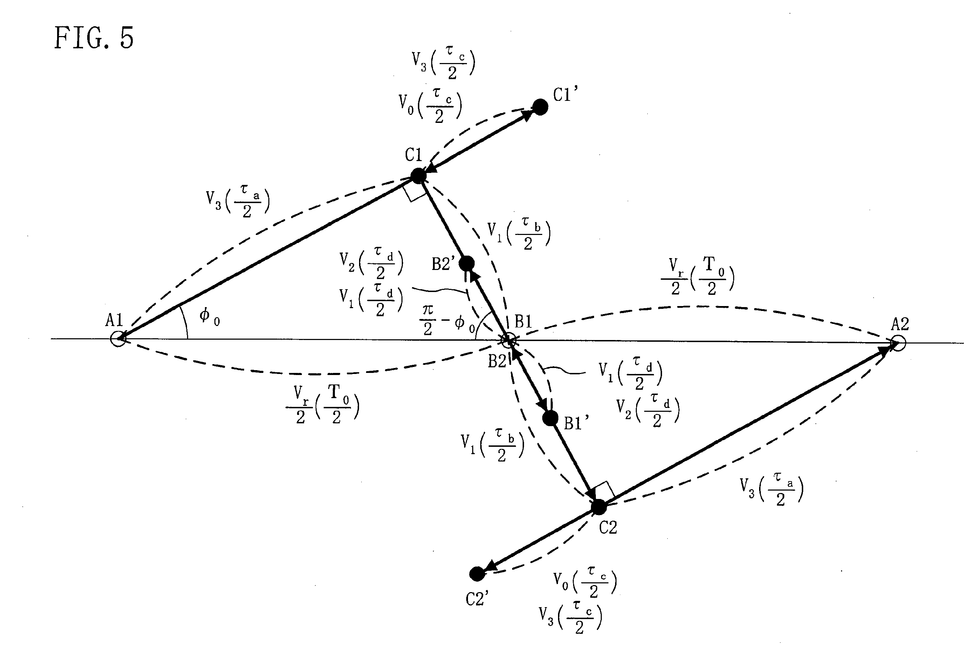

Here, the voltage vectors selected from the four voltage vectors V0 to V3 and their output periods differ depending on a region on the complex plane as shown in FIG. 4. That is, in bringing the locus of the flux vector $\lambda p$ close to a circular locus, the sequence of the voltage vectors used differs according to where the locus is created in the circle. The example shown in FIG. 3 is one example where the locus of the flux vector $\lambda p$ is created in the region I in FIG. 4. In the region II in FIG. 4, the locus of the flux vector $\lambda p$ is created as shown in FIG. 5.

Specifically, in the region II, the voltage vector V3 is output at the point A1 for the period $(\tau a + \tau c)/2$ to move the flux vector $\lambda p$ to the point C1'. Then, the voltage vector V0 in the direction reverse thereto is output for the period $\tau c/2$ to move the flux vector $\lambda p$ to the point C1. Next, the voltage vector V1 is output for the period $(\tau b + \tau d)/2$ to move the flux vector $\lambda p$ to the point B1'. Then, the voltage vector V2 in the direction reverse thereto is output for the period $\tau d/2$ to cause the flux vector $\lambda p$ to reach a point B1.

Subsequently, for moving the voltage from the point B1 to the point A2, the voltage vectors Vp may be output in the sequence reverse to the above sequence. That is, the voltage vector V2 is output for the period $\tau d/2$ to move the flux vector $\lambda p$ to the point B2'. Next, the voltage vector V1 in the reverse direction thereto is output for the period $(\tau b + \tau d)/2$ to move the flux vector $\lambda p$ to the point C2. Then, the voltage vector V0 is output for the period $\tau c/2$ to move the flux vector $\lambda p$ to the point C2'. Thereafter, the voltage vector V3 in the direction reverse thereto is output for the period $(\tau a + \tau c)/2$ to cause the flux vector $\lambda p$ to reach the point A2.

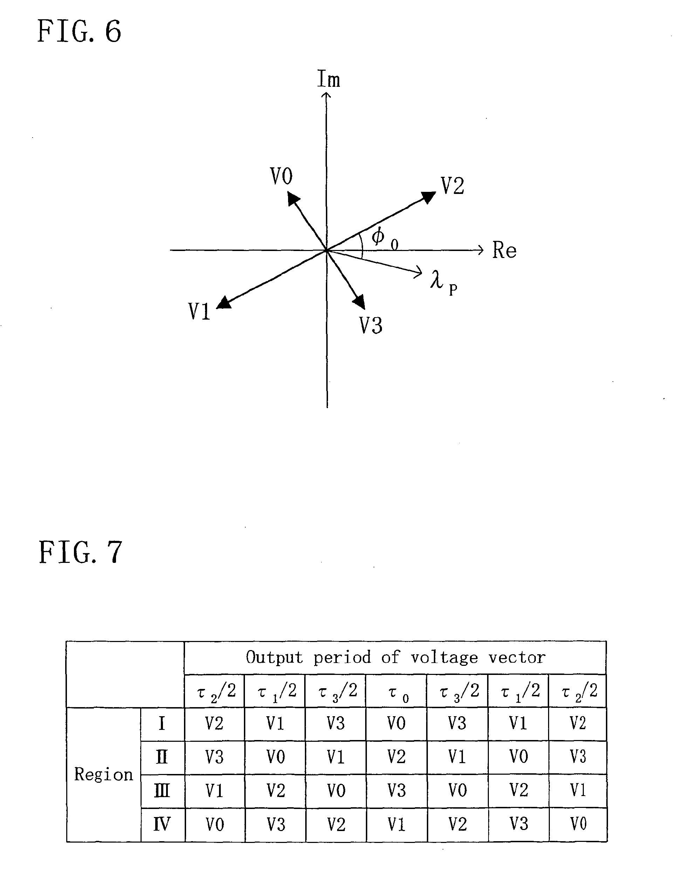

Similarly to the case in the region I, $\tau a$ to $\tau d$ in this case can be expressed by the following expressions with the use of the relationship between the voltage vectors Vp and the flux vector $\lambda p$ on the complex plane in FIG. 6.

$$\tau a = \sqrt{3} \cdot k \cdot T0 \cdot \cos\varphi0$$

$$\tau b = k \cdot T0 \cdot \sin\varphi0$$

$$\tau c = 1/2 \cdot (T0 - \tau a - \tau b) \cdot (\tau a/(\tau a + \tau b))$$

$$\tau d = 1/2 \cdot (T0 - \tau a - \tau b) \cdot (\tau b/(\tau a + \tau b))$$

It is noted that, similarly to the case in the region I, the respective periods $\tau 0$ to $\tau 3$ for which the respective voltage vectors V0 to V3 are output can be expressed as follows from FIG. 5.

$$\tau 0 = \tau c$$

$$\tau 1 = \tau b + \tau d$$

$$\tau 2 = \tau d$$

$$\tau 3 = \tau a + \tau c$$

Similarly, in the regions III and IV in FIG. 4, the output sequences and output periods of the voltage vectors Vp are obtained so that the locus of the flux vector $\lambda p$ approaches to a circular locus, of which results are shown in FIG. 7. FIG. 7 shows output patterns of the voltage vectors Vp for double edge modulation. In a case of single edge modulation, the inverter circuit (3) may be controlled to change the voltage vectors Vp until the time at $\tau 0/2$ in FIG. 7 in one cycle of the carrier frequency.

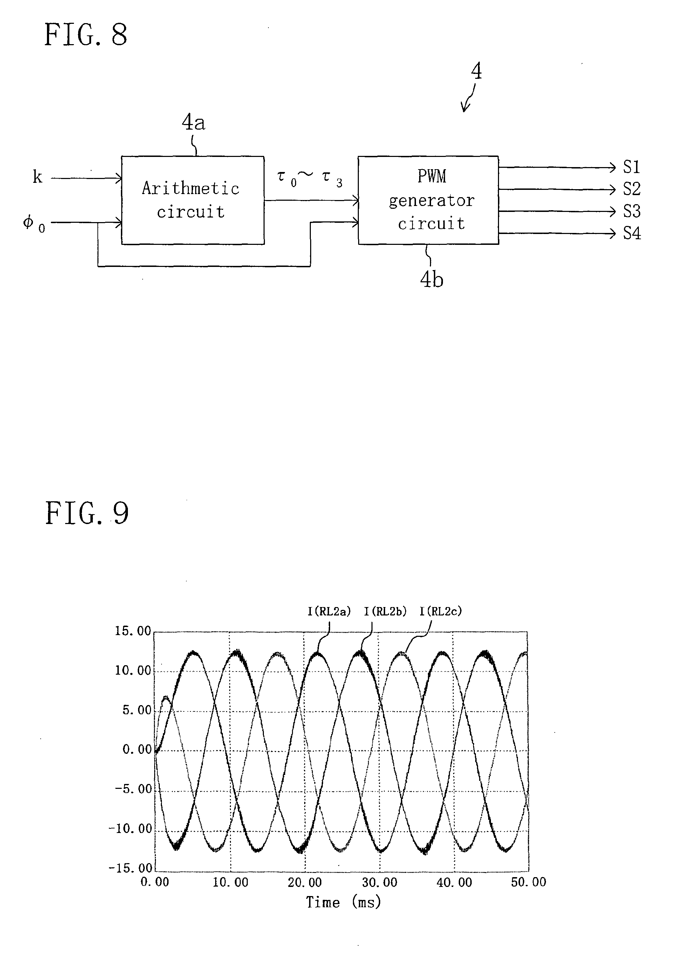

FIG. 8 shows a configuration of the control circuit (4) performing the PWM control described above. This control circuit (4) includes an arithmetic circuit (4a) performing various kinds of operation, and a PWM generator circuit outputting switching signals corresponding to the voltage vectors Vp according to output signals of the arithmetic circuit (4a). That is, in the control circuit (4), when an output voltage amplitude command value k and an output voltage phase command value $\varphi 0$ are provided as a command value to the arithmetic circuit (4a), $\tau 0$ to $\tau 3$ are calculated with the use of the above relational expressions for $\tau 0$ to $\tau 3$ and $\tau a$ to $\tau d$ in each region in FIG. 4. The calculation results are sent to the PWM generator circuit (4b) as signals. The PWM generator circuit (4b) sends switching signals to the switching elements (3a to 3d) so as to cause the switching elements (3a to 3d) to output the voltage vectors Vp as shown in FIG. 7 for the corresponding periods. In FIG. 7, S1 to S4 denote output signals to the switching elements (3a to 3d).

FIG. 9 shows the results of simulation of the above PWM control. As shown in FIG. 9, since the balanced three phases current can be supplied from the V connection inverter circuit (3) to the load (5), it can be understood that the above PWM control is an appropriate control method.

- Advantages of Example Embodiment 1 -

As described above, in the present example embodiment, the output sequences and output periods of the four voltage vectors Vp obtained by the operation of the switching elements (3a to 3d) of the V connection inverter circuit (3) are determined so that the flux vector $\lambda p$ of the inverter circuit (3) creates a locus close to a circle on the complex plane. Accordingly, the harmonic components included in the output voltage of the inverter circuit (3) can be reduced, and a loss generated in the load (5) connected to the inverter circuit (3) can be reduced.

Specifically, in the V connection inverter circuit (3), the four voltage vectors Vp are obtained by the operation of the switching elements (3a to 3d). This means fewer than those obtained in a Y connection inverter circuit. Further, no zero voltage vector is present unlike the Y connection inverter circuit. Therefore, strain can tend to be caused in the waveform of the output voltage, and more harmonic components may be included in the output voltage. However, determination of the output sequences and output periods of the voltage vectors Vp as in FIG. 7 enables the locus of the flux vector $\lambda p$ to be further closer to a circle, thereby reducing the harmonic components included in the output voltage.

That is, when the voltage vectors Vp are combined so that the flux vector $\lambda p$ of the inverter circuit (3) overlaps on the complex plane, the flux vector $\lambda p$ can create a locus further closer to a circle according to one cycle T0 of the carrier frequency even in the inverter circuit (3) having no zero voltage vector.

Moreover, in the present example embodiment, so-called double edge modulation is performed in which the locus of the flux vector $\lambda$p created by using the voltage vectors Vp is point symmetric with respect to the ideal circular locus in a half cycle of the carrier frequency, as shown in FIGS. 3 and 5. This can bring the locus of the flux vector $\lambda$p to further close to a circle, thereby ensuring a reduction in harmonic components included in the output voltage.

Furthermore, change in output sequences of the voltage vectors Vp according to a region shown in FIG. 4 can bring the locus of the flux vector $\lambda$p further closer to an arc in each region, thereby further ensuring a reduction in harmonic components included in the output voltage.

In addition, when the power converter (1) with the above configuration drives an electric motor for a compressor provided in a refrigerant circuit of an air conditioner, a loss generated in the electric motor can be reduced, thereby improving driving efficiency of the compressor, in turn, of the entire air conditioner. That is, in general, air conditioners and refrigerators are usually driven in regions whose outputs are lower than the rated outputs (low speed regions of electric motors driving compressors). Even in such a region, the power converter (1) with the V connection inverter circuit (3) can sufficiently drive the electric motor to achieve a reduction in switching losses when compared with a case using a Y connection inverter circuit. Further, operation control on the switching elements (3a to 3d) can prevent a loss in the electric motor from increasing even in the V connection inverter circuit (3).

<Example Embodiment 2>

Next, a power converter according to Example Embodiment 2 will be described below. The configuration of this power converter is the same as that in Example Embodiment 1, and the difference is only the control. Therefore, the same reference characters are assigned to the same elements, and only the difference will be descried.

Specifically, unlike Example Embodiment 1, in Example Embodiment 2, the flux vector $\lambda$p creates a locus closer to a circle by using three voltage vectors of the four voltage vectors Vp obtained by the operation of the switching elements (3a to 3d) of the inverter circuit (3). It is noted that, in the present example embodiment, similarly to Example Embodiment 1, the region of the locus that the flux vector $\lambda$p creates on the complex plane is divided into four, as shown in FIG. 4, and the output sequences and output periods of the optimum voltage vectors are determined in the respective regions.

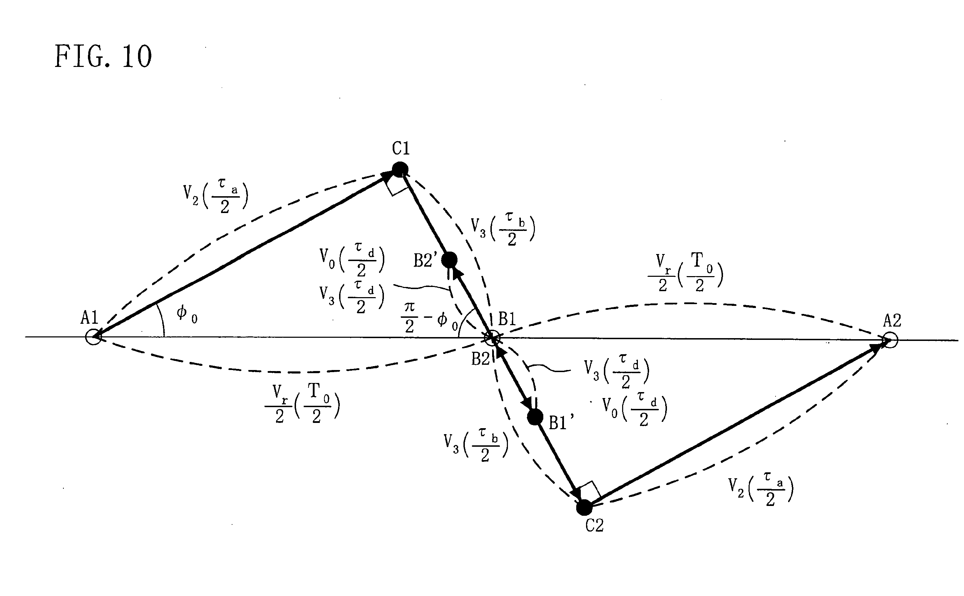

That is, in the present example embodiment, the flux vector $\lambda$p creates the locus as shown in FIG. 10 in the region I in FIG. 4. FIG. 10 shows also an example of a combination of the voltage vectors Vp used for bringing $\lambda$p close to a circular locus (a line segment between a point A1 and a point A2 in FIG. 10) as far as possible in one cycle T0 of the carrier frequency, as in Example Embodiment 1. In other word, in FIG. 10, in order to cause the voltage to follow the voltage command value Vr in one cycle T0 of the carrier frequency, the locus of the flux vector $\lambda$p may be allowed to reach the point A2 from the point A1 by using a plurality of voltage vectors Vp. It is noted that one cycle T0 of the carrier frequency is equal to $\tau$a+$\tau$b+2$\tau$d in the example shown in FIG. 10.

In the example shown in FIG. 10, when the voltage is located at the point A1, the voltage vector V2 is output for a period $\tau$a/2 to move the flux vector $\lambda$p to a point C1. Then, the voltage vector V3 is output for a period ($\tau$b+$\tau$d)/2 to move the flux vector $\lambda$p to a point B1'. Next, the voltage vector V0 in the direction reverse to the voltage vector V3 is output for a period $\tau$d/2 to move the flux vector $\lambda$p to a point B1.

Subsequently, for moving the vector from the point B1 to the point A2, the voltage vectors Vp may be output in the sequence reverse to the above sequence. That is, the voltage vector V0 is first output for the period $\tau$d/2 to move the flux vector $\lambda$p to a point B2'. Next, the voltage vector V3 in the reverse direction thereto is output for the period ($\tau$b+$\tau$d)/2 to move the flux vector $\lambda$p to a point C2. Then, the voltage vector V2 is output for the period $\tau$a/2 to cause the flux vector $\lambda$p to reach the point A2.

Here, since the carrier frequency T0 is $\tau$a+$\tau$b+2$\tau$d as discussed above, $\tau$a, $\tau$b, and $\tau$d can be expressed by the following expressions with the use of the relationship between the voltage vectors Vp and the flux vector $\lambda$p on the complex plane in FIG. 2.

$$\tau a = k \cdot T0 \cdot \cos\varphi0$$

$$\tau b = \sqrt{3} \cdot k \cdot T0 \cdot \sin\varphi0$$

$$\tau d = 1/2 \cdot (T0 - \tau a - \tau b)$$

In the above expressions, k = $\sqrt{2} \cdot$Vr/Ed.

It is noted that, from FIG. 10, the respective periods $\tau 0$, $\tau 2$, and $\tau 3$ for which the respective voltage vectors V0, V2, V3 are output are

$$\tau 0 = \tau d$$

$$\tau 2 = \tau a$$

$$\tau 3 = \tau b + \tau d.$$

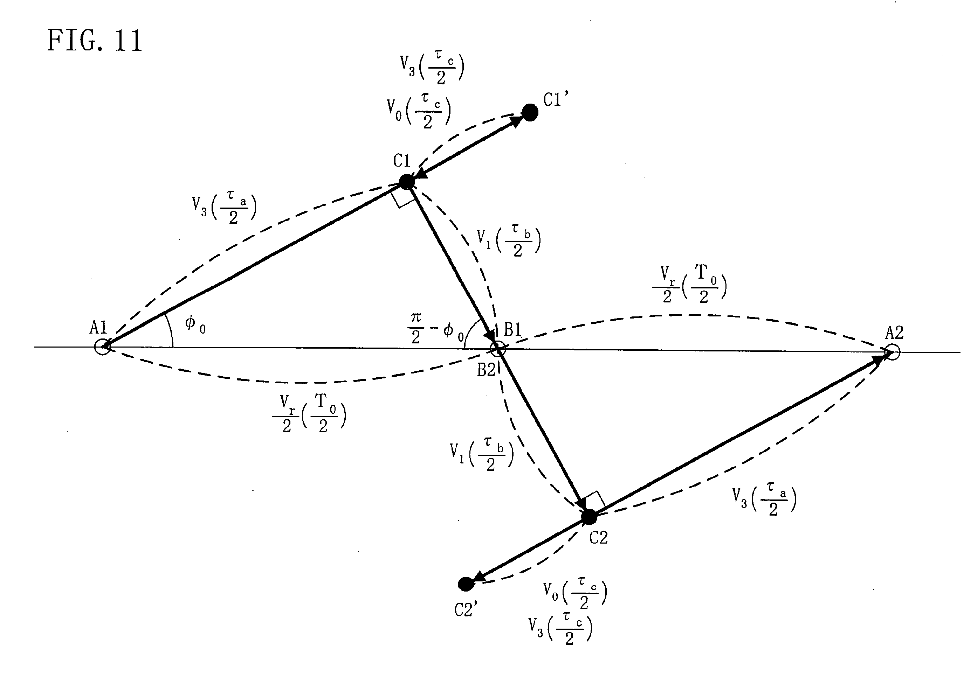

Referring next to an example in the region II in FIG. 4, in Example Embodiment 2, output control of the voltage vectors Vp is performed so as to create the locus of the flux vector $\lambda p$ shown in FIG. 11 in the region II.

Specifically, after the voltage vector V3 is output for a period $(\tau a + \tau c)/2$ at a point A1 to move the flux vector $\lambda p$ to a point C1', the voltage vector V0 in the direction reverse thereto is output for a period $\tau c/2$ to move the flux vector $\lambda p$ to a point C1. Next, the voltage vector V 1 is output for a period $\tau b/2$ to move the flux vector $\lambda p$ to a point B1.

Subsequently, for moving the flux vector $\lambda p$ from the point B1 to a point A2, the voltage vectors Vp may be output in the sequence reverse to the above sequence. That is, the voltage vector V1 is first output for the period $\tau b/2$ to move the flux vector $\lambda p$ to a point C2. Next, the voltage vector V0 is output for the period $\tau c/2$ to move the flux vector $\lambda p$ to a point C2'. Then, the voltage vector V3 in the direction reverse thereto is output for the period $(\tau a + \tau c)/2$ to cause the flux vector $\lambda p$ to reach the point A2.

Similarly to the case in the region I, $\tau a$ to $\tau c$ in this case can be expressed by the following expressions with the use of the relationship between the voltage vectors Vp and the flux vector $\lambda p$ on the complex plane in FIG. 6.

$$\tau a = \sqrt{3} \cdot k \cdot T0 \cdot \cos\varphi 0$$

$$\tau b = k \cdot T0 \cdot \sin\varphi 0$$

$$\tau c = 1/2 \cdot (T0 - \tau a - \tau b)$$

Similarly to the case in the region I, it is noted that, from FIG. 11, the respective periods $\tau 0$, $\tau 1$, and $\tau 3$ for which the respective voltage vectors V0, V1, V3 are output are

$$\tau 0 = \tau c$$

$$\tau 1 = \tau b$$

$$\tau 3 = \tau a + \tau c.$$

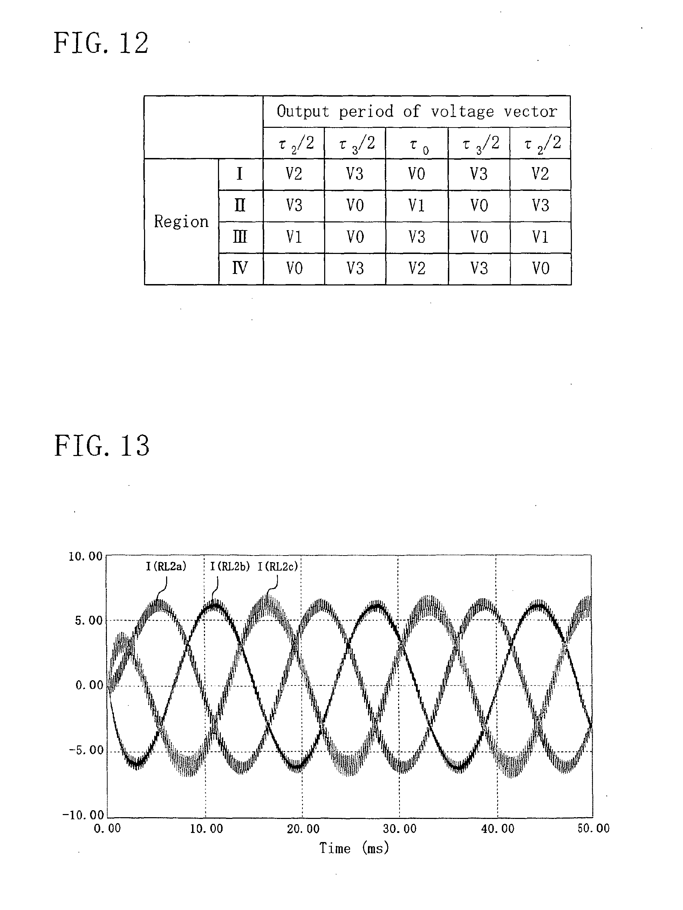

Similarly, in the regions III and IV in FIG. 4, the output sequences and the output periods of the voltage vectors Vp are obtained so that the locus of the flux vector $\lambda p$ approaches to a circular locus, of which results are shown in FIG. 12. FIG. 12 shows output patterns of the voltage vectors Vp for double edge modulation. In a case of single edge modulation, the inverter circuit (3) may be controlled to change the voltage vectors Vp until the time at τ0/2 in FIG. 12 in one cycle of the carrier frequency.

The configuration of the control circuit (4) performing the above PWM is the same as that shown in FIG. 8 in Example Embodiment 1. Therefore, the description is omitted.

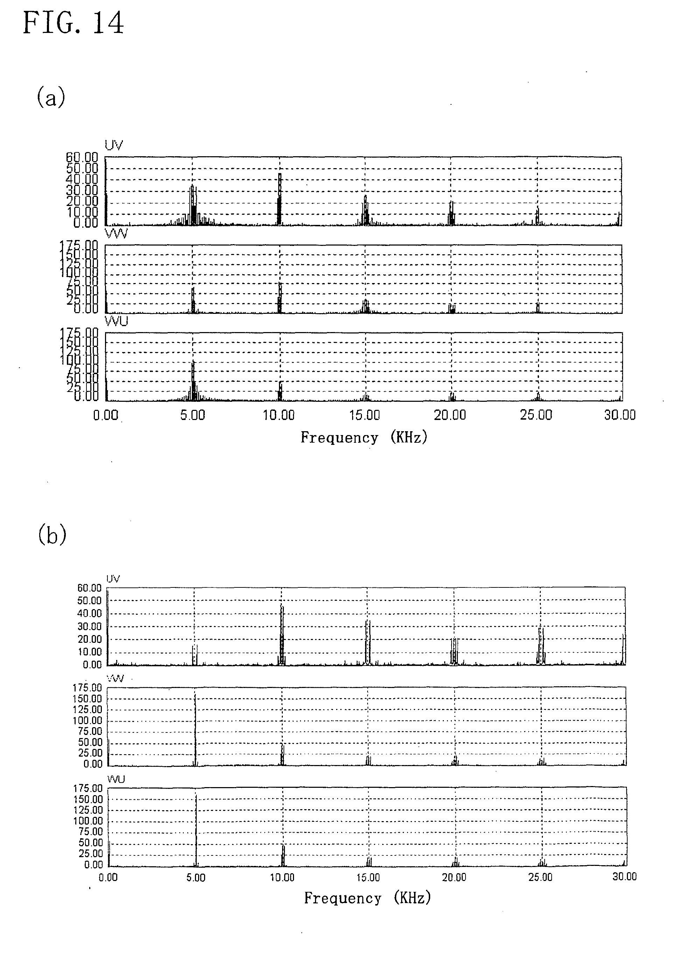

FIGS. 13 and 14 shows the results of simulation of the above PWM control. As shown in FIG. 13, since the balanced three phases current can be supplied from the V connection inverter circuit (3) to the load (5), it can be understood that the above PWM control is an appropriate control method. Further, as shown in FIG. 14(a), the peak values (especially at 5 KHz) are significantly reduced when compared with those in the conventional control method (FIG. 14(b)). This shows that the above control can achieve output of the waveform including few harmonic components. Accordingly, the locus of the flux vector λp can be brought further closer to a circular locus when compared with a conventional control method, thereby reducing the harmonic components included in the output voltage.

- Advantages of Example Embodiment 2 -

As described above, in the present example embodiment, the output sequences and output periods of three voltage vectors of the four voltage vectors Vp obtained by the operation of the switching elements (3a to 3d) of the V connection inverter circuit (3) are determined so that the flux vector λp the inverter circuit (3) creates a locus close to a circle on the complex plane. Accordingly, the harmonic components included in the output voltage of the inverter circuit (3) can be reduced, and a loss generated in the load (5) connected to the inverter circuit (3) can be reduced.

Specifically, in the V connection inverter circuit (3), the four voltage vectors Vp are obtained by the operation of the switching elements (3a to 3d). This means fewer than those obtained in a Y connection inverter circuit. Further, no zero voltage vector is present unlike the Y connection inverter circuit. Therefore, distortion tends to be caused in the waveform of the output voltage, and more harmonic components may be included in the output voltage. However, the above configuration enables the locus of the flux vector λp to be further close to a circle, thereby reducing the harmonic components included in the output voltage.

That is, when the voltage vectors Vp is combined so that the flux vector λp of the inverter circuit (3) overlaps on the complex plane, the flux vector λp can create a locus further closer to a circle according to one cycle T0 of the carrier frequency even in the inverter circuit (3) having no zero voltage vector.

In addition, the use of only three voltage vectors Vp for creating the flux vector λp can reduce the number of times of operation of the switching elements (3a to 3d) of the inverter circuit (3) by one when compared with the case using the four voltage vectors Vp as in Example Embodiment 1, thereby achieving a reduction in loss.

Moreover, in the present example embodiment, also, so-called double edge modulation is performed in which the locus of the flux vector λp created by using the voltage vectors Vp is point symmetric with respect to the ideal circular locus in a half cycle of the carrier frequency, as shown in FIGS. 10 and 11. This can bring the locus of the flux vector λp to further closer to a circle, thereby ensuring a reduction in harmonic components included in the output voltage.

Furthermore, change in output sequences of the voltage vectors Vp according to a region shown in FIG. 4 can bring the locus of the flux vector λp further closer to an arc in each region, thereby further ensuring a reduction in harmonic components included in the output voltage.

<Example Embodiment 3>

Next, a power converter according to Example Embodiment 3 will be described below. The configuration of this power converter is the same as that in Example Embodiments 1 and 2, and the difference is only the control: Therefore, the same reference characters are assigned to the same elements, and only the difference will be descried.

Specifically, similarly to Example Embodiment 2, in Example Embodiment 3, the flux vector λp creates a locus across the ideal circular locus in a half cycle T0/2 of the carrier frequency by using three voltage vectors of the four voltage vectors Vp obtained by the operation of the switching elements (3a to 3d) of the inverter circuit (3). It is noted that, in the present example embodiment, similarly to Example Embodiments 1 and 2, the region of the locus that the flux vector λp creates on the complex plane is divided into four, as shown in FIG. 4, and the output sequences and output periods of the optimum voltage vectors are determined in the respective regions.

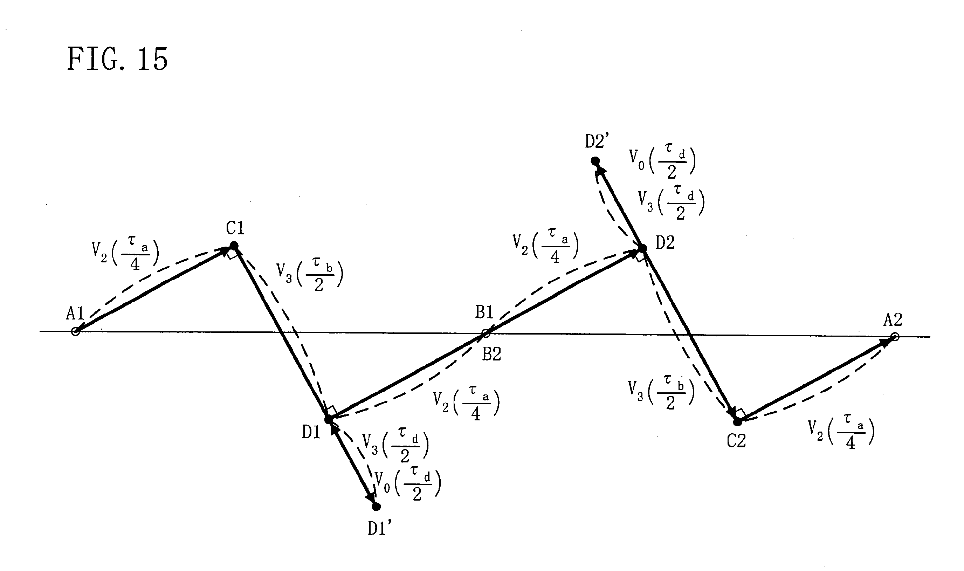

That is, in the present example embodiment, the flux vector λp creates the locus as shown in FIG. 15 in the region I in FIG. 4. FIG. 15 shows also an example of a combination of the voltage vectors Vp used for bringing λp closer to a circular locus (a line segment between a point A1 and a point A2 in FIG. 15) as far as possible in one cycle T0 of the carrier frequency, as in Example Embodiments 1 and 2. In other word, in FIG. 15, in order to cause the voltage to follow the voltage command value Vr in one cycle T0 of the carrier frequency, the locus of the flux vector λp may be allowed to reach the point A1 from the point A1 by using a plurality of voltage vectors Vp.

In the example shown in FIG. 15, starting from the point A1, the voltage vectors are output in the sequence of V2, V3, V0, V2, V0, V3, and then V2. Further, the output period of the voltage vector V2 is set to be a half of the output period of the voltage vector V2 in Example Embodiment 2 (see FIG. 10). This allows the locus of the flux vector $\lambda p$ created by the voltage vectors Vp to cross the ideal circular locus (a line connecting the points A1, B1, and A2 in FIG. 15) in a half cycle T0/2 of the carrier frequency.

Thus, the locus of the flux vector $\lambda p$ can be brought further closer to a circular locus to reduce the harmonic components included in the output voltage more than those in Example Embodiments 1 and 2, thereby further reducing a loss generated in the motor (5).

It is noted that the relational expressions for the output periods where the flux vector $\lambda p$ creates a locus by using three voltage vectors are the same as those in Example Embodiment 2, and only the output sequences are changed. Therefore, detailed calculation of the output periods of the voltage vectors is omitted.

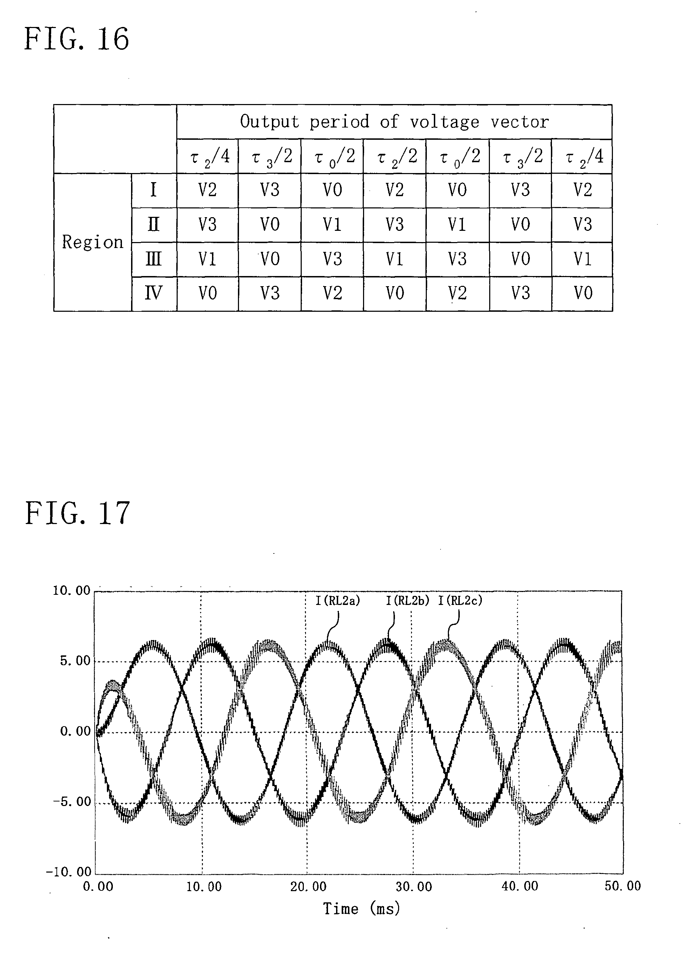

In the regions II to IV in FIG. 4, the output sequences and the output periods of the voltage vectors Vp are obtained so that the locus of the flux vector $\lambda p$ approaches to a circular locus, of which results are shown in FIG. 16. FIG. 16 shows output patterns of the voltage vectors Vp for double edge modulation. In a case of single edge modulation, the inverter circuit (3) may be controlled to change the voltage vectors Vp (from V2 to V3, V0, and then V2) until the time at $\tau2/4$ in FIG. 16 in one cycle of the carrier frequency.

The configuration of the control circuit (4) performing the above PWM is the same as that shown in FIG. 8 in Example Embodiment 1. Therefore, the description is omitted.

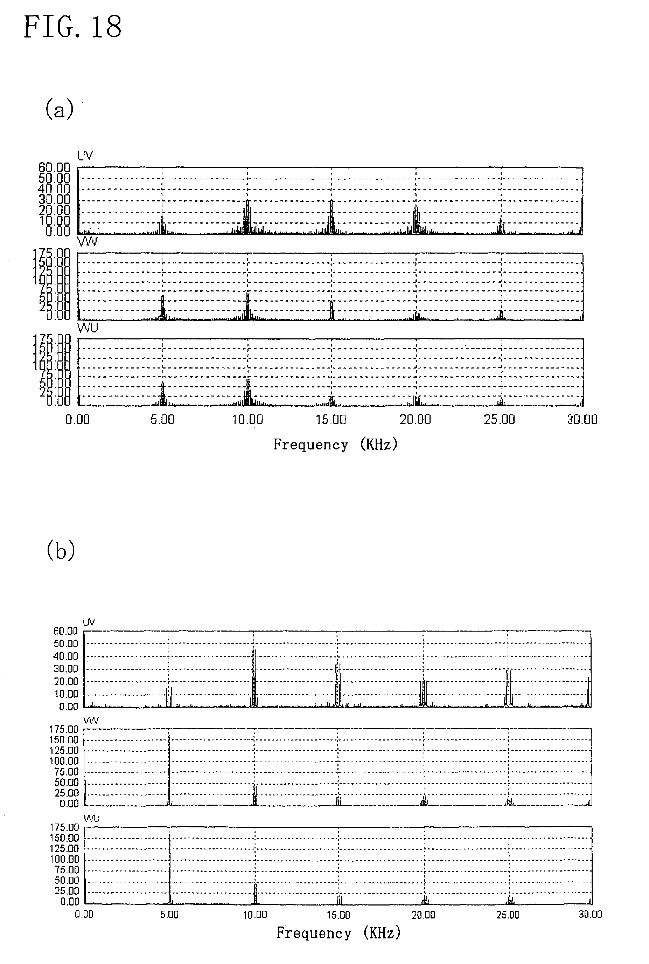

FIGS. 17 and 18 shows results of simulation of the above PWM control. As shown in FIG. 17, since the balanced three phases current can be supplied from the V connection inverter circuit (3) to the load (5), it can be understood that the above PWM control is an appropriate control method. Further, as shown in FIG. 18(a), the peak values (especially at 5 KHz) are significantly reduced when compared with those in the conventional control method (FIG. 18(b)). This shows that the above control can achieve output of the waveform including few harmonic components. Accordingly, the locus of the flux vector $\lambda p$ can be brought further closer to a circular locus when compared with a conventional control method, thereby reducing the harmonic components included in the output voltage.

- Advantages of Example Embodiment 3 -

As described above, in the present example embodiment, the output sequences and output periods of three voltage vectors of the four voltage vectors Vp obtained by the operation of the switching elements (3a to 3d) of the V connection inverter circuit (3) are determined so that the flux vector $\lambda p$ the inverter circuit (3) creates a locus close to a circle on the complex plane. Accordingly, the harmonic components included in the output voltage of the inverter circuit (3) can be reduced, and a loss generated in the load (5) connected to the inverter circuit (3) can be reduced.

Specifically, in the V connection inverter circuit (3), the four voltage vectors Vp are obtained by the operation of the switching elements (3a to 3d). This means fewer than those obtained in a Y connection inverter circuit. Further, no zero voltage vector is present unlike the Y connection inverter circuit. Therefore, strain can tend to be caused in the waveform of the output voltage, and more harmonic components may be included in the output voltage. However, the above configuration can bring the locus of the flux vector $\lambda p$ further closer to a circle, thereby reducing the harmonic components included in the output voltage.

That is, when the voltage vectors Vp are combined so that the flux vector $\lambda p$ of the inverter circuit (3) overlaps on the complex plane, the flux vector $\lambda p$ can create a locus further closer to a circle according to one cycle T0 of the carrier frequency even in the inverter circuit (3) having no zero voltage vector.

Furthermore, the output sequences and output periods of the voltage vectors Vp are determined so that the locus created by the flux vector $\lambda p$ crosses the ideal circular locus. Accordingly, the locus of the flux vector $\lambda p$ can be further closer to a circular locus, thereby further ensuring a reduction in harmonic components included in the output voltage.

Moreover, in the present example embodiment, also, so-called double edge modulation is performed in which the locus of the flux vector $\lambda p$ created by using the voltage vectors Vp is point symmetric with respect to the ideal circular locus in a half cycle of the carrier frequency, as shown in FIGS. 15. This can bring the locus of the flux vector $\lambda p$ further closer to a circle, thereby ensuring a reduction in harmonic components included in the output voltage.

In addition, change in output sequences of the voltage vectors Vp according to the a region shown in FIG. 4 can bring the locus of the flux vector $\lambda p$ close to an arc in each region, thereby further ensuring a reduction in harmonic components included in the output voltage.

<Example Embodiment 4>

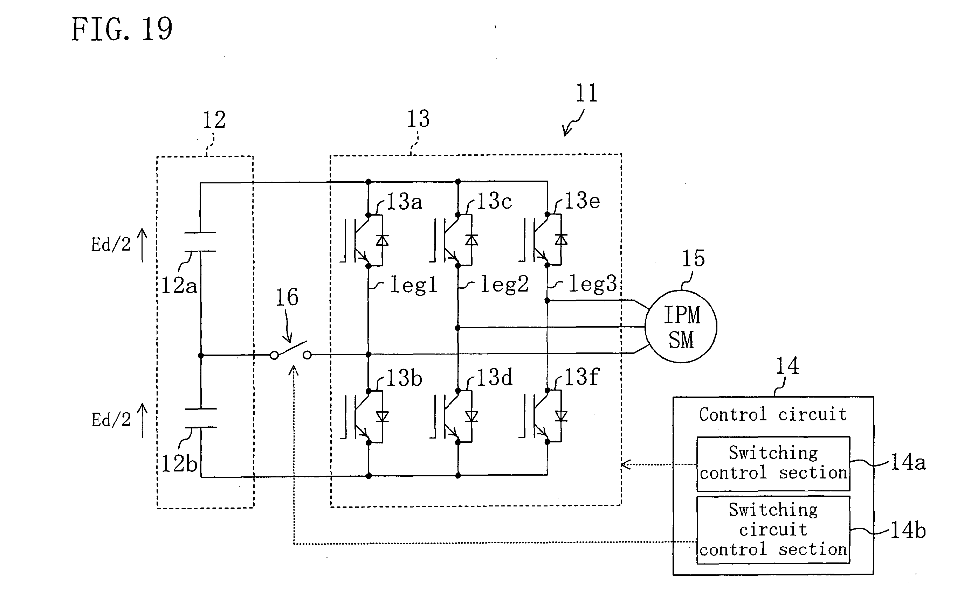

Next, a power converter (11) according to Example Embodiment 4 of the present invention will be described below. This power converter (11) is different from the power converters (1) in Example Embodiments 1 to 3 in the points, as shown in FIG. 19, that a switching circuit (16) is provided so as to switch an inverter circuit (13) between V connection and Y connection, and that the inverter circuit (13) includes six switching elements (13a to 13f). The same reference characters are assigned to the same elements, and only the difference will be described below.

Specifically, the power converter (11) includes three switching legs (leg1, leg2, leg3) in each of which two switching elements are connected in series to each other. The switching legs (leg1, leg2, leg3) are connected to respective phases of a motor (15). A switching circuit (16) is provided between the intermediate point of one (leg1) of the switching legs and the intermediate potential point of capacitors (13a, 13b) connected in series to each other in a capacitor circuit (12).

Further, the power converter (11) includes a control circuit (14) including a switching control section (14a) (switching control means) controlling the switching elements (13a to 3f) and a switching circuit control section (14b) (switching circuit control means) switching on/off the switching circuit (16).

That is, in the power converter (11), on/off switching of the switching circuit (16) by the switching circuit control section (14b) switches the inverter circuit (13) between three-phase connection (three-phase inverter) and two-phase connection (a V connection inverter). Specifically, when the switching circuit control section (14b) turns on the switching circuit (16) and the switching control section (14a) turns off the switching elements (13a, 13b) of the switching leg (leg1) to which the switching circuit (16) is connected, the inverter circuit (13) is operated in a state where two phases are connected. By contrast, when the switching circuit (16) is turned off, the inverter circuit (13) is switched to operation in a state where three phases are connected.

In other words, in the operation where the three phases are connected, the three switching legs (leg1 to leg3) are switched on, thereby applying all the voltages of the DC voltage Ed of the capacitor (12) to the motor (15). By contrast, in the operation where two phases are connected, two switching legs (leg2, leg3) are switched on, thereby applying about a half of the DC voltage Ed of the capacitor circuit (12) to the motor (15). Therefore, in the operation where the two phases are connected, the total amount of the switching legs used becomes two thirds of that in the operation where the three phases are connected. This means a reduction in inverter loss (switching losses) to about two thirds.

Incidentally, in the operation where the two phases are connected, only a half of the DC voltage of the capacitor circuit (12) can be applied to the motor (15), as described above. Therefore, it is preferable to set the operation where the three phases are connected in high speed rotation of the motor (15), and to set the operation where the two phases are connected only in low speed rotation. Thus, by control on the switching circuit (16) according to the state of the load, such as the motor (15), connection of the inverter circuit (13) can be switched, thereby achieving energy conservation of the power converter.

In particular, the power converter (11) is preferably used for driving the motor (15) of a compressor provided in a refrigerant circuit of an air conditioner. In general air conditioners, when cooling or heating loads are high as in summer or winter, the compressors are driven in high speed rotation ranges (high output ranges). By contrast, when loads are low as in so-called intermediate seasons, the compressors are driven in low speed rotation ranges (low output ranges). Accordingly, for driving the electric motor (15) of a compressor used in an air conditioner, the switching circuit (16) is controlled to switch the inverter circuit (3) between the connections according to the load of the electric motor (15). Here, though not shown, the compressor, a condenser, an expansion mechanism, and an evaporator are connected in a closed circuit in the refrigerant circuit of the air conditioner, and refrigerant is reversibly circulated for performing an evaporation compression refrigeration cycle.

In the power converter (11) having the above configuration, when the switching circuit (16) is turned on to V-connect the inverter circuit (13), the switching control section (14a) controls the voltage vectors Vp so that the flux vector λp creates a locus close to a circle, as in Example Embodiments 1 to 3. This can reduce the harmonic components included in the output voltage, thereby achieving a reduction in loss generated in the motor (15).

- Advantages of Example Embodiment 4 -

As described above, in the power converter (11) according to the present example embodiment, the inverter circuit (13) is capable of being switched between the operation where the three phases are connected and the operation where the two phases are connected, and is V-connected when the motor (15) is in low speed rotation and is Y-connected when the motor (15) is in high speed rotation. This can reduce a loss in the power converter (11), and can operate the motor (15) correspondingly to the high speed rotation. In other words, V connection in the low speed rotation of the motor (15) can reduce the switching losses, and Y connection in the high speed rotation of the motor (15) can generate high electric power, thereby facilitating high speed rotation of the motor (15).

Moreover, when the inverter circuit (13) is V-connected, the switching elements (13a to 13f) of the inverter circuit (13) are controlled so that the flux vector λp creates a locus close to a circle by using the voltage vectors Vp as in Example Embodiments 1 to 3. This can reduce the harmonic components included in the output voltage. Accordingly, the core loss due to the presence of the harmonic components can be prevented from increasing in the motor (15), and driving efficiency of the motor (15) can be improved.

In addition, when the power converter (11) with the above configuration is used as a power source for supplying electric power to the motor (15) of a compressor of a refrigerant circuit, efficiency of the electric motor (15) can be improved, thereby achieving improvement of driving efficiency on an air condition or the like.

<Other Example Embodiments>

The above example embodiments may have the following configurations.

The above example embodiments use, but are not limited to, three or more voltage vectors Vp for allowing the locus of the flux vector $\lambda p$ to be substantially triangular. The voltage vectors Vp may be changed in smaller increments to allow the locus of the flux vector $\lambda p$ to create smoother a sawtooth shape, thereby creating a locus further closer to a circle.

Moreover, in the above example embodiments, the locos of the flux vector $\lambda p$ retraces in part protruding from the locus of triangular shapes, although the present invention is not limited in this respect. It may retraces in the locus of substantially triangular shapes, as in FIG. 10.

Furthermore, in the above example embodiments, the capacitor circuit (2) is configured, but is not limited, by the two capacitors (2a, 2b), and may be configured by three or more capacitors.

In addition, in the above example embodiments, the switching elements (3a to 3d) are configured by, but are not limited to, semiconductor switches in which semiconductor transistors (self-turn-off elements) and diodes are connected in parallel to each other. They may be any elements as long as they can be on/off controlled.

INDUSTRIAL APPLICABILITY

As described above, the present invention is especially useful for power converters including V connection inverter circuits, for example.

**Claims**

1. A power converter including a capacitor circuit (2) which includes a plurality of capacitors (2a, 2b) connected in series to each other and which is capable of charging and discharging a DC voltage, and an inverter circuit (3) of which two switching legs (leg1, leg2) connecting respective two switching elements (3a, 3b, 3c, 3d) in series are connected in parallel to the capacitor circuit (2), where intermediate points of the switching legs (leg1, leg2) of the inverter circuit (3) are connected to the load (5), and an intermediate potential point of the capacitor circuit (2) is connected to the load (5), thereby converting DC power of the capacitor circuit (2) to AC power to supply the AC power to the load (5), the power converter, comprising:

   switching control means (4) which controls the operation of the switching elements (3a, 3b, 3c, 3d) of the inverter circuit (3) so that a locus of a flux vector ($\lambda p$) created on a complex plane by using voltage vectors (Vp) obtained by operation of the switching elements (3a, 3b, 3c, 3d) approaches to a circle.

2. The power converter of claim 1, wherein
   the switching control means (4) allows the flux vector $\lambda p$ to create the locus by using at least three voltage vectors of four voltage vectors (V0, V1, V2, V3) obtained by the operation of the switching elements (3a, 3b, 3c, 3d) of the inverter circuit (3) in one cycle of a carrier frequency.

3. The power converter of claim 2, wherein
   the switching control means (4) calculates output periods of the voltage vectors (V0, V1, V2, V3) used for creating the locus of the flux vector $\lambda p$ on the basis of the carrier frequency (T0), and controls the operation of the switching elements (3a, 3b, 3c, 3d) so as to allow the voltage vectors (V0, V1, V2, V3) to be output for the calculated output periods.

4. The power converter of claim 2, wherein
   the switching control means (4) controls the operation of the switching elements (3a, 3b, 3c, 3d) so that the locus of the flux vector $\lambda p$ overlaps on the complex plane.

5. The power converter of claim 2, wherein
   the switching control means (4) controls the operation of the switching elements (3a, 3b, 3c, 3d) so that the locus of the flux vector $\lambda p$ is created by using all the four voltage vectors (V0, V1, V2, V3) in one cycle of the carrier frequency so as to be close to a circle.

**6.** The power converter of claim 2, wherein
the switching control means (4) controls the operation of the switching elements (3a, 3b, 3c, 3d) so that the locus of the flux vector λp is created by using three voltage vectors of the four voltage vectors (V0, V1, V2, V3) in one cycle of the carrier frequency so as to be close to a circle.

**7.** The power converter of claim 2, wherein
the switching control means (4) controls the operation of the switching elements (3a, 3b, 3c, 3d) so that the locus of the flux vector λp created by using three voltage vectors of the four voltage vectors (V0, V1, V2, V3) crosses an ideal circular locus in a half of a cycle of the carrier frequency.

**8.** The power converter of claim 2, wherein
the switching control means (4) changes, where the locus of the flux vector λp created on the complex plane is divided into a plurality of regions (I, II, III, IV), output sequences and output periods of the voltage vectors (V0, V1, V2, V3) correspondingly to regions so that the locus of the flux vector λp approaches to arcs in the respective regions (I, II, III, IV).

**9.** The power converter of claim 2, wherein
the switching control means (4) controls the operation of the switching elements (3a, 3b, 3c, 3d) so that the locus of the flux vector λp created by the voltage vectors (V0, V1, V2, V3) is point symmetric with respect to an ideal circular locus in every half cycle of the carrier frequency.

**10.** A power converter, comprising
a capacitor circuit (12) which includes a plurality of capacitors (12a, 12b) connected in series to each other and which is capable of charging and discharging a DC voltage;
an inverter circuit (13) of which three switching legs (leg1, leg2, leg3) connecting respective two switching elements (13a, 13b, 13c, 13d, 13e, 13f) in series are connected in parallel to the capacitor circuit (12);
a switching circuit (16) which is connected between an intermediate potential point of the capacitor circuit (12) and an intermediate point of one (leg1) of the switching legs;
switching circuit control means (14b) which turns on the switching circuit (16) when a load (15) is low to set the inverter circuit (13) in a two-phase connection, and which turns off the switching circuit (16) when the load (15) is high to set the inverter circuit (13) in a three-phase connection; and
switching control means (14a) which controls the operation of the switching elements (13a, 13b 13c, 13d, 13e, 13f) of the inverter circuit (13), when the switching circuit control means (14b) turns on the switching circuit (16), so that a locus of a flux vector λp on a complex plane created by using at least three voltage vectors of four voltage vectors (V0, V1, V2, V3) obtained by the operation of the switching elements (13a, 13b, 13c, 13d, 13e, 13f) in one cycle of a carrier frequency approaches to a circle.

**11.** The power converter of any one of claims 1 to 10, wherein
an electric motor (5, 15) of a compressor is driven by AC power converted in the inverter circuit (3, 13).

**12.** The power converter of claim 11, wherein
the compressor is provided in a refrigerant circuit of an air conditioner.

FIG. 1

FIG. 2

FIG. 3

EP 2 151 914 A1

FIG. 4

FIG. 5

EP 2 151 914 A1

## FIG. 6

## FIG. 7

| | | Output period of voltage vector | | | | | | |
|---|---|---|---|---|---|---|---|---|
| | | $\tau_2/2$ | $\tau_1/2$ | $\tau_3/2$ | $\tau_0$ | $\tau_3/2$ | $\tau_1/2$ | $\tau_2/2$ |
| Region | I | V2 | V1 | V3 | V0 | V3 | V1 | V2 |
| | II | V3 | V0 | V1 | V2 | V1 | V0 | V3 |
| | III | V1 | V2 | V0 | V3 | V0 | V2 | V1 |
| | IV | V0 | V3 | V2 | V1 | V2 | V3 | V0 |

FIG. 8

4a

k ⟶ 

$\phi_0$ ⟶

┌─────────────┐
│ Arithmetic  │
│ circuit     │
└─────────────┘

$\tau_0 \sim \tau_3$

4

┌─────────────┐
│ PWM         │
│ generator   │
│ circuit     │
└─────────────┘

⟶ S1
⟶ S2
⟶ S3
⟶ S4

4b

FIG. 9

I(RL2a)  I(RL2b)  I(RL2c)

Time (ms)

FIG. 10

EP 2 151 914 A1

FIG. 11

FIG. 12

| | | Output period of voltage vector | | | | |
| --- | --- | --- | --- | --- | --- | --- |
| | | $\tau_2/2$ | $\tau_3/2$ | $\tau_0$ | $\tau_3/2$ | $\tau_2/2$ |
| Region | I | V2 | V3 | V0 | V3 | V2 |
| | II | V3 | V0 | V1 | V0 | V3 |
| | III | V1 | V0 | V3 | V0 | V1 |
| | IV | V0 | V3 | V2 | V3 | V0 |

FIG. 13

FIG. 14

(a)

Frequency (KHz)

(b)

Frequency (KHz)

# FIG. 15

EP 2 151 914 A1

# FIG. 16

| | | Output period of voltage vector | | | | | | |
|---|---|---|---|---|---|---|---|---|
| | | $\tau_2/4$ | $\tau_3/2$ | $\tau_0/2$ | $\tau_2/2$ | $\tau_0/2$ | $\tau_3/2$ | $\tau_2/4$ |
| Region | I | V2 | V3 | V0 | V2 | V0 | V3 | V2 |
| | II | V3 | V0 | V1 | V3 | V1 | V0 | V3 |
| | III | V1 | V0 | V3 | V1 | V3 | V0 | V1 |
| | IV | V0 | V3 | V2 | V0 | V2 | V3 | V0 |

# FIG. 17

FIG. 18

(a)

Frequency (KHz)

(b)

Frequency (KHz)

FIG. 19

EP 2 151 914 A1

FIG. 20

**INTERNATIONAL SEARCH REPORT**

| International application No. |
|---|
| PCT/JP2008/001138 |

A. CLASSIFICATION OF SUBJECT MATTER
*H02M7/48(2007.01)i, H02M7/5387(2007.01)i*

According to International Patent Classification (IPC) or to both national classification and IPC

B. FIELDS SEARCHED

Minimum documentation searched (classification system followed by classification symbols)
H02M7/48, H02M7/5387

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-196582 A (Fuji Electric Co., Ltd.), 21 July, 1999 (21.07.99), Full text; all drawings (Family: none) | 1-12 |
| Y | JP 3-207271 A (Daikin Industries, Ltd.), 10 September, 1991 (10.09.91), Full text; all drawings (Family: none) | 1-12 |
| Y | JP 2000-350476 A (Fuji Electric Co., Ltd.), 15 December, 2000 (15.12.00), Full text; all drawings (Family: none) | 10 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 16 July, 2008 (16.07.08) | 29 July, 2008 (29.07.08) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

| | International application No. |
|---|---|
| | PCT/JP2008/001138 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-58258 A  (LG Electronics Inc.), 22 February, 2002 (22.02.02), Full text; all drawings & US 2002/0012255 A1     & GB 2364606 A & GB 110668 D0          & DE 10130557 A & KR 10-2002-0001163 A  & KR 10-2002-0000610 A & CN 1332515 A | 1-12 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Koji Kato ; Jun-ichi Itoh.** Comparison of Conducted Emission between Full Bridge and V-connection Voltage source, and Current Source Inverter. *The Institute of Electrical Engineers of Japan, National Conference, 4-054,* 2006, 82-83